(19)

Europäisches Patentamt

European Patent Office

Office européen des brevets

(11) **EP 2 745 702 A1**

(12) **EUROPEAN PATENT APPLICATION**

(43) Date of publication:
**25.06.2014 Bulletin 2014/26**

(51) Int Cl.:
***A23G 9/46*** *(2006.01)* ***A23L 1/20*** *(2006.01)*
***A23L 1/24*** *(2006.01)*

(21) Application number: **12198877.8**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Unilever N.V.**
**3013 AL Rotterdam (NL)**

(72) Inventors:
• **Blijdenstein, Theodorus Berend Jan**
**3133 AT Vlaardingen (NL)**

• **De Groot, Petrus Wilhelmus Nicolaas**
**3133 AT Vlaardingen (NL)**
• **Jansen, Jeoffrey Nikolai**
**3133 AT Vlaardingen (NL)**
• **Ko, Meliana**
**3133 AT Vlaardingen (NL)**

(74) Representative: **van Benthum, Wilhelmus A. J. et al**
**Unilever N.V.**
**Unilever Patent Group**
**Olivier van Noortlaan 120**
**3133 AT Vlaardingen (NL)**

(54) **Aerated compositions containing ground pulse seed and hydrophobin**

(57) The present invention provides aerated compositions containing ground pulse seed and hydrophobin. Aerated food products can be prepared that are stable and that do not require other emulsifiers in order to make stable products.

EP 2 745 702 A1

**Description**

The present invention relates to aerated compositions containing ground pulse seed and hydrophobin and a method for making these compositions.

**BACKGROUND OF THE INVENTION**

Many food products are aerated, such as mousses, ice cream, and whipped cream. These food products contain small gas bubbles, and the gases may include air, nitrogen, and/or carbon dioxide. Aerated food products are being developed with two aspects which are of importance: first the foamability (how easy is it to aerate the food product), and second the stability of the aeration during storage (how well remain the air bubbles intact upon storage of the aerated food product).

Hydrophobins are proteins known for their ability to effectively stabilise gas bubbles in compositions. The hydrophobins contribute both to foamability and foam stability. For example WO 2006/010425 A1, WO 2007/039064 A1, WO 2010/136354 A1, and WO 2010/136355 A1 disclose aerated compositions containing hydrophobins.

A pulse is an annual leguminous crop yielding from one to twelve seeds of variable size, shape, and color within a pod. Pulses and pulse seeds are commonly used for food and animal feed. A legume in botany writing is a plant from the family Fabaceae (or Leguminosae), or a fruit of these specific plants. Examples of pulses and pulse seeds include dry beans (*Phaseolus spp*.), dry peas (*Pisum spp*.), chickpea (*Cicer arietinum),* lentil *(Lens culinaris),* lupins *(Lupinus spp.),* and soyabean *(Glycine max).*

Pulses and pulse seeds are well known to be used in emulsion food products.

WO 2012/089448 A1 discloses oil-in-water emulsions containing finely ground pulse seed, preferably from lentils, chickpeas, or beans.

WO 2006/082640 A1 discloses mayonnaise containing soybean fibre. US 6,783,271 discloses a mayonnaise-like emulsion comprising soybean paste. EP 2 183 983 A2 discloses an enzymatically treated lupin bean powder and using this as an ingredient of a salad dressing. WO 99/51106 A1 discloses edible compositions comprising lupine proteins as emulsion stabilisers.

KR 100529149 B1 discloses the use of bean powder in mayonnaise that is free from egg yolk.

The use of pulses or pulse seeds or their extracts can be used in aerated products.

EP 0 371 725 A1 discloses aerated food products containing pea puree and pea flour. GB 557,483 discloses an aerated food product that contains ground soya beans or ground haricot beans.

EP 1 967 077 A1 discloses frozen aerated food products containing soy protein and soy fat, having a good texture and good melting behaviour.

EP 976 332 A2 discloses that enzymatically hydrolyzed lecithin with increased lysophospholipid content can be used as stabilizer and emulsifier in ice cream.

Sathe S.K. et al. (Journal of Food Science 47(2), 1982, p. 491-497) describe foaming properties of flour obtained by grinding dried lupin seed *(Lupinus mutabilis)* in water. Also a protein concentrate of the lupin seed was investigated on foam properties in water. Foamability of the flour was lower than that of the protein concentrate, while the stability was comparable. The foaming capacity of the flour and the protein concentrate was lower than that of soybean and sunflower protein concentrates/isolates.

Sathe S.K. et al. (Journal of Food Science 46(1), 1981, p. 71-81) describe foaming properties of flour and various protein fractions from the great northern bean *(Phaseolus vulgaris* L.) in water. The foamability was comparable to egg albumin (egg white), while the foam stability of protein of the great northern bean was less than that of egg albumin.

**SUMMARY OF THE INVENTION**

Aerated products with hydrophobin that also contain emulsifiers like phospholipids, may suffer from instability with regards to the aeration (both gas bubble size and total gas bubble volume). The emulsifiers may interfere with the stabilising action of the hydrophobins, leading to decreased stability of aerated products. Examples of such products are oil-in-water emulsions like mayonnaises and light mayonnaises. These generally contain egg yolk, and phospholipids are an important element of egg yolk.

Hence it is an object of the present invention to provide aerated products with hydrophobins, and in particular aerated oil-in-water emulsions with hydrophobins, that are stable with regard to gas bubble volume, as well as gas bubble size. Moreover, it is an object of the present invention to provide aerated aerated products with hydrophobins, and in particular aerated oil-in-water emulsions with hydrophobins, which do not require the addition of extra emulsifiers to create stable products.

We have now found that this problem can be solved by providing aerated products containing a combination of ground pulse seed and hydrophobin.

Accordingly in a first aspect the present invention provides an aerated composition having an overrun of at least 5%, comprising water, and ground pulse seed, wherein the pulse seed has a lipid content of maximally 6%, based on the weight of the raw pulse seed, and hydrophobin, and wherein the concentration of phospholipids is maximally 0.18% by weight of the composition.

In a second aspect the present invention provides a method for preparation of a composition according to the first aspect of the invention, comprising the following steps:

a) hydrating ground pulse seed in water at a temperature of at least 70°C during at least 5 minutes;
b) optionally adding water soluble ingredients to the mixture from step a);
c) optionally dispersing liquid edible oil into the mixture from step b);
d) optionally adding egg yolk fraction comprising protein and phospholipids at a weight ratio of at least 3:1 wt/wt; and
e) mixing the mixture from step c) or step d) with an aqueous foam containing hydrophobin.

**DETAILED DESCRIPTION**

Unless defined otherwise, all technical and scientific terms used herein have the same meaning as commonly understood by one of ordinary skill in the art. All percentages, unless otherwise stated, refer to the percentage by weight, with the exception of percentages cited in relation to the overrun.

In the context of the present invention and unless stated otherwise, the average gas bubble diameter is expressed as the d4,3 value, which is the volume weighted mean diameter. The volume based bubble size equals the diameter of a bubble that has the same volume as a given bubble. Also the d3,2 value may be used, which is defined as the diameter of a sphere that has the same volume/surface area ratio as a droplet or bubble of interest.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. Aeration and foaming are considered to be synonyms in this respect, as well as aeratability and foamability. Also an 'aerated product' and a 'foam' are considered to be synonyms in here.

The extent of aeration is measured in terms of 'overrun', which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the product is made). Overrun is measured at atmospheric pressure.

After formation, a foam will be vulnerable to coarsening and and phase separation by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them. In general the smaller the average size of gas bubbles, the more preferable to obtain an aerated product of good quality.

A stable foam or in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and looses maximally 20% of its volume during 1 month storage. On the other hand systems may exist which loose more than 20% of its volume during 1 month storage, which nevertheless are considered to have a good stability, as the stability of such foams is much better than comparative foams.

Such a foam can be produced by aerating a composition using an aerolatte, kenwood mixer, or a BA Mixer, to a fixed overrun of for example 100%. The foam is then placed into a 100 mL measuring cylinder, stoppered, and stored at 5°C, and the foam volume measured over time. Foams of which the average bubble size strongly increases over time are regarded to be less stable than foams of which the average bubble size remains small over time.

*Aerated compositions*

In a first aspect the present invention provides an aerated composition having an overrun of at least 5%, comprising water, and ground pulse seed, wherein the pulse seed has a lipid content of maximally 6%, based on the weight of the raw pulse seed, and hydrophobin, and wherein the concentration of phospholipids is maximally 0.18% by weight of the composition.

The composition of the invention preferably can be used as a food product, to which other ingredients can be added if required. The composition can be used as a basis for foams and/or aerated compositions or food products.

Preferably, the composition of the invention has an overrun of at least 10%, preferably at least 20%, and preferably at most 200%, and preferably at most 100%. Preferably the overrun is at least 30%.

The bubbles present in the aerated composition may have a wide range of sizes, preferably of up to 2,000 micrometer. More preferably the average bubble size d4,3 is smaller than 1,500 micrometer, more preferably the average bubble size d4,3 is smaller than 1,000 micrometer. Preferably the major part of the bubbles is small, hence preferably at least 50% of the gas bubbles has a diameter of maximally 1,000 micrometer. Preferably at least 25% of the gas bubbles has a diameter of maximally 500 micrometer. In some products a small average bubble size is desired, and in that case preferably at least 50% of the gas bubbles has a diameter of maximally 200 micrometer, and preferably at least 25% of the gas bubbles has a diameter of maximally 100 micrometer.

Additionally the composition may comprise a hydrocolloid thickener at a concentration ranging from 0.1 % by weight to 1% by weight based on the weight of the composition. Hydrocolloid thickeners that may be used, are preferably xanthan gum, locust bean gum, guar gum, carrageenan, carboxy methylcellulose, starch, or combinations of these. Xanthan gum, carrageenan, locust bean gum or any combination of these thickeners are preferred. The addition of a hydrocolloid thickener is especially preferred in oil-in-water emulsions, when the oil level is preferably maximally 40%, preferably maximally 30%, preferably maximally 25% by weight. Preferably the pH of the composition of the invention ranges from 3 to 5, preferably from 3 to 4.5.

Preferably the concentration of ground pulse seed ranges from 0.1 to 10% by weight of the composition. This concentration is based on the weight of the raw pulse seed. Preferably the concentration of ground pulse seed ranges from 0.1 to 5% by weight, preferably from 0.5 to 5% by weight of the composition. When the composition is in the form of an oil-in-water emulsion, the concentration of ground pulse seed preferably is at the higher end of the range of relatively low oil levels, meaning less than 40% by weight of oil. Vice versa, when the oil level is relatively high, the concentration of ground pulse seed is more at the lower end of the range. The ground pulse seed preferably is finely ground pulse seed, meaning that the maximum particle size of the ground pulse seed is less than 500 micrometer, preferably less than 400 micrometer.

Preferably the ground pulse seed is obtained from pulse seed having the following composition, calculated on raw weight of the pulse seed:

- 25-55 wt% of starch;
- 1-40 wt% of dietary fiber;
- 0.5-12 wt% of sugars;
- 15-35 wt% of protein; and
- 0.8-8 wt% of lipids. Preferably the amount of dietary fibers in the ground pulse seed ranges from 20-40 wt%, preferably from 25-35 wt%. Preferably the amount of lipids in the ground pulse seed ranges from 0.8-6 wt%, preferably from 0.8-5 wt%, preferably from 0.8-4 wt%, preferably from 0.8-3 wt%, and more preferably from 0.8-2 wt%, and most preferably from 0.8-1.5 wt%. Preferably the pulse seed contains starch and protein in a weight ratio of 2:3 to 3:1, preferably 1:1 to 5:2.

Preferably the pulse seed is obtained from plants from the genuses *Vigna, Lens,* or *Cicer.* Preferably the pulse seed is obtained from plants from the species *Vigna radiata, Lens culinaris, Cicer arietinum,* preferably from plants from the species *Lens culinaris. Vigna radiata* is the plant yielding the mung bean (used to be classified as *Phaseolus aureus*), *Lens culinaris* is the plant yielding lentil, and *Cicer arietinum* is is the plant yielding chickpea.

Since the finely ground pulse can replace emulsifiers that are conventionally used to stabilise aerated food products, and in particular oil-in-water emulsions, the present invention provides a composition wherein the concentration of phospholipids is maximally 0.18% by weight of the composition. These phospholipids may originate from various sources, such as egg yolk, but also may originate from the pulse seed. Preferably the composition of the invention does not contain extra added emulsifiers selected from lecithin, monoglyceride, diglyceride and PEG ester. Preferably the addition of extra emulsifiers to create stable products is not required, hence preferably the compositions of the present invention are substantially free from added emulsifiers, more preferred the compositions are free from added emulsifiers. With added emulsifiers is meant that these are compounds which are generally added only to function as emulsifier, and examples of these are mono- and diglycerides, PEG ester, other food grade emulsifiers like for example diacetyl tartaric ester of mono- and diglycerides (Datem), and polysorbates. Egg yolk may be added to food products for various purposes, namely to provide an emulsifier (phospholipids), and also as a source of protein, and as ingredient that gives taste and flavour and texture to the composition.

Preferably the concentration of phospholipids originating from egg yolk is maximally 0.15% by weight of the composition. Preferably, the concentration of phospholipids is maximally 0.13% by weight of the composition. Preferably the concentration of phospholipids originating from egg yolk is maximally 0.10% by weight of the composition. Phospholipids in this respect are defined as the compounds that have a glycerol backbone, a phosphate group, one or two fatty acid chains, and often a nitrogen-containing alcohol group (e.g. ethanolamine). They act as emulsifiers, as they have a hydrophilic head and a hydrophobic tail. The most abundant phospholipids are phosphatidylcholine, lysophosphatidylcholine, phosphatidylinositol, and phosphatidylethanolamine.

Preferably, the composition of the invention is a non-frozen composition. This means that the composition of the invention preferably is prepared and stored at a temperature above 0°C.

*Emulsions*

Preferably, the composition is in the form of an oil-in-water emulsion. Any commonly available oil or fat can be used to create the emulsion. Examples are dairy fat and vegetable oils like sunflower oil, olive oil, rapeseed oil, soybean oil, etcetera. Such emulsion may be created by dispersing an oil into the composition of the invention, or mixing the aerated composition of the invention with an oil-in-water emulsion. For example mixing the aerated composition of the invention with a mayonnaise or a dressing creates an oil-in-water emulsion according to the invention. Preferably, the composition contains from 5 to 70% of dispersed oil phase, based on the weight of the composition. More preferred the amount of dispersed oil phase ranges from 10 to 50% by weight. If present, preferably oil droplets are dispersed as droplets having an average d3,2 value ranging from 2 to 12 micrometer, preferably from 3 to 10 micrometer.

The terms 'fat' and 'oil' are used interchangeably. Where applicable the prefix *'liquid'* or *'solid'* is added to indicate if the fat or oil is liquid or solid at ambient temperature as understood by the person skilled in the art. Edible oils contain a large number of different triacylglycerols (TAGs) with varying physical properties. The TAGs are esters of glycerol and three fatty acids. The TAGs in edible oils contain fatty acids with an even number of carbon atoms in the chains, generally varying between 4 and 24 in number. Common fatty acids from vegetable origin are C10, C12, C14, C16, C18, C20 and C22, and most common TAGs are composed of these fatty acids. The fatty acids may be saturated, or monounsaturated or polyunsaturated. Each fatty acid can contain up to three double bonds at certain positions in the chain. Additionally especially fish oil contains a high number of unsaturated fatty acids with more than one unsaturated bond in the chain, up to even 4 or 5 double bonds. The terms *'triacylglycerols', 'TAGs',* and *'triglycerides'* may be used interchangeably in here. In the context of the present invention, triglycerides are understood to be edible oils and fats.

Oil may originate from various edible natural oils. Fats include: plant oils (for example: allanblackia oil, apricot kernel oil, arachis oil, arnica oil, argan oil, avocado oil, babassu oil, baobab oil, black seed oil, blackberry seed oil, blackcurrant seed oil, blueberry seed oil, borage oil, calendula oil, camelina oil, camellia seed oil, castor oil, cherry kernel oil, cocoa butter, coconut oil, corn oil, cottonseed oil, evening primrose oil, grapefruit oil, grape seed oil, hazelnut oil, hempseed oil, illipe butter, lemon seed oil, lime seed oil, linseed oil, kukui nut oil, macadamia oil, maize oil, mango butter, meadowfoam oil, melon seed oil, moringa oil, mowrah butter, mustard seed oil, olive oil, orange seed oil, palm oil, palm kernel oil, papaya seed oil, passion seed oil, peach kernel oil, plum oil, pomegranate seed oil, poppy seed oil, pumpkins seed oil, rapeseed (or canola) oil, red raspberry seed oil, rice bran oil, rosehip oil, safflower oil, seabuckthorn oil, sesame oil, shea butter, soy bean oil, strawberry seed oil, sunflower oil, sweet almond oil, walnut oil, wheat germ oil); fish oils (for example: sardine oil, mackerel oil, herring oil, cod-liver oil, oyster oil); animal oils (for example: butter or conjugated linoleic acid, lard or tallow); algae oil, or any mixture or fraction thereof. The oils and fats may also have been modified by hardening, fractionation, chemical or enzymatical interesterification or by a combination of these steps.

The oil phase of the composition of the invention may be liquid at room temperature, or may be solid or partly solid at room temperature, or may be combination of both types of oil. Examples of oils that are liquid at room temperature are sunflower oil, olive oil, rapeseed oil, and other commonly known liquid vegetable oils. Examples of oils that are solid or partly solid at room temperature are coconut oil, dairy fat, and palm oil or palm oil fractions. Dairy fat is of animal origin, and most commonly is sourced from the milk of mammals like cows, sheep, and goats. These fats are preferred for use in the compositions of the invention.

Generally natural oils contain at least 80% of triglycerides. Natural oils also may contain other compounds than triglycerides, such as diglycerides, monoglycerides and free fatty acids. Also compounds like lecithin, other emulsifiers, phytosterols, phytostanols, waxes, colourants like carotenoids, vitamins like vitamin A, D, E, and K, and antioxidants like the tocopherols (vitamin E) may be present in a natural oil. Preferably the total concentration of emulsifiers that do not originate from ground pulse seed is maximally 0.15% by weight of the composition, more preferred maximally 0.10% by weight of the composition.

Preferred compositions according to the invention that are food products and oil-in-water emulsions, are dressings, mayonnaises and light mayonnaises.

*Egg yolk fractions*

Egg yolk is not only added to many products to provide emulsifying capacity, but also because it provides taste and flavour to the product. Hence preferably the composition of the invention comprises an egg yolk fraction, wherein the egg yolk fraction has been treated to remove at least part of the phospholipids. Hence preferably the composition further comprises egg yolk fraction, and the egg yolk fraction comprises protein and phospholipids at a weight ratio of at least 3:1 wt/wt. Examples of such egg yolk fractions are defatted egg yolk and heat-stabilised egg yolk.

Defatted egg yolk is an egg yolk which has been defatted by extracting lipid compounds from the egg yolk, for example by ethanol extraction. A suitable source of defatted egg yolk is Defatted Egg yolk powder 79 ex Bouwhuis Enthoven (Raalte, the Netherlands.

Heat stabilised egg yolk is an egg yolk that has been subjected to an enzymatic process using phospholipase, leading to split off of one or two fatty acid chains from the phospholipid molecules. The fragments are retained in the sample. A suitable source of heat stabilised egg yolk is Heat stabilised egg yolk (92-8) ex Bouwhuis Enthoven (Raalte, the Netherlands).

Preferably the composition of the invention comprises an egg yolk fraction that comprises protein and phospholipids at a weight ratio of at least 15:1 wt/wt, preferably at least 20:1 wt/wt. More preferred the egg yolk fraction comprises protein and phospholipids at a weight ratio ranging from 20:1 to 40:1, preferably from 25:1 to 35:1, and most preferred from 25:1 to 30:1.

Preferably the composition of the invention comprises an egg yolk fraction that comprises protein and lipids at a weight ratio of at least 1:1 wt/wt, preferably at least 2:1 wt/wt.

Preferably the composition of the invention has a total concentration of phospholipids of maximally 0.05% by weight, most preferably of maximally 0.025% by weight of the composition.

*Hydrophobins*

Hydrophobins are a well-defined class of proteins (Wessels, 1997, Advances in Microbial Physiology 38: 1-45; Wosten, 2001, Annual Reviews of Microbiology 55: 625-646) that are capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \text{ (SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \text{ (SEQ ID NO. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO 01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. *Trichoderma),* basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol. 65:

5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO 01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Hydrophobins are excellent foaming agents that lead to good foamability and good foam stability of a product to which the hydrophobin is added. Hydrophobins are generally rather expensive, hence the product developer has the tendency to keep the concentration of hydrophobin as low as possible. This not only leads to cost reduction, but also to saving of resources, as the production of the hydrophobin naturally costs energy. Preferably the concentration of hydrophobin ranges from 0.001 % to 2% by weight, preferably from 0.001 % to 1% by weight. Preferably the concentration of hydrophobin is at least 0.002% by weight, more preferably at least 0.005% by weight, and more preferably at least 0.01 % by weight based on the weight of the composition. Preferably the concentration of hydrophobin is maximally 0.3% by weight, preferably at most 0.25% by weight based on the weight of the composition.

The hydrophobin used in the present invention can be a Class I or a Class II hydrophobin. Preferably the hydrophobin comprises class II hydrophobin, preferably class II hydrophobin HFBI or class II hydrophobin HFBII. Preferably the hydrophobin is in isolated form. Preferably the hydrophobin is soluble in water. Preferably the hydrophobin is a class II hydrophobin HFBII.

When preparing the composition of the invention, the hydrophobin may be added to the other ingredients as a foamed solution in water. The concentration of this solution in water is preferably between 0.05 and 10% by weight, based on the weight of the water, preferably between 0.1 and 5% by weight, more preferably between 0.1 and 1% by weight.

As indicated before, the advantages of the composition of the invention is not only that the foamability of the composition improves, but also the foam stability during storage. Foamability can be split in two parts; the first part relates to the ability to reach a high overrun, and the second to the ability to generate small bubbles during aeration. For some applications the presence of small bubbles is an advantage, hence if the average bubble size decreases, this is considered to be an advantage.

The composition of the invention can be used in an aerated food product. The composition of the invention is then used as such, or the aerated composition can be mixed with ingredients of such food product or with the food product itself. Preferred food products are soufflés, dressings, mayonnaise, light mayonnaise and other products.

*Method for preparation of the composition of the invention*

In a second aspect the present invention provides a method for preparation of a composition according to the first aspect of the invention, comprising the following steps:

a) hydrating ground pulse seed in water at a temperature of at least 70°C during at least 5 minutes;
b) optionally adding water soluble ingredients to the mixture from step a);
c) optionally dispersing liquid edible oil into the mixture from step b);
d) optionally adding egg yolk fraction comprising protein and phospholipids at a weight ratio of at least 3:1 wt/wt; and
e) mixing the mixture from step c) or step d) with an aqueous foam containing hydrophobin.

In step a) the ground pulse seed is hydrated and heated in water, in order to gelatinise the starch. The time and temperature required for this preferably conform to one of the following requirements:

● 70-80°C: 5-80 minutes

● 80-100°C 5-70 minutes

● 100-120°C: 60-1200 seconds

● 120-150°C: 30-480 seconds

The equipment used preferably can be any equipment which is normally used in the art to heat this kind of mixtures. Preferably the concentration of ground pulse seed in step a) ranges from 0.5% to 10% by weight, preferably from 1% to 5% by weight.
In optional step b) water-soluble ingredients are added to the dispersion in any suitable way known to the skilled person.
In optional step c) the emulsification may be done applying any emulsification method commonly known, for example high pressure homogenisation operated at a pressure ranging from 40 to 300 bar and 1 to 3 passes. Preferably the emulsification is done such that the average droplet size of the oil is smaller than 10 micrometer. Preferably the emulsification is done with an edible oil that is liquid at room temperature. In case the oil phase is solid or semi-solid at room temperature, the emulsification may be done at a temperature that the oil phase is liquid, for example at a temperature higher than 40°C or higher than 50°C.
In optional step d) egg yolk fraction comprising protein and phospholipids at a weight ratio of at least 3:1 wt/wt; is added and mixed in any suitable way known to the skilled person.
Finally in step e) an aerated composition of hydrophobin in water is provided, to be mixed with the mixture from the previous step. This way an aerated product is obtained. The aeration may be done with any common means to aerate an aqueous product, for example an aerolatte, kenwood mixer, or a BA Mixer.
The concentration of hydrophobin in the aqueous composition prior to aerating preferably ranges from 0.05% to 1% by weight of the composition, more preferred ranges from 0.1% to 0.5%, more preferred from 0.1% to 0.3%. The overrun of the aerated aqueous composition comprising hydrophobin in step e) preferably ranges from 100% to 1,000%, more preferred from 200% to 900%.

## DESCRIPTION OF FIGURES

*Figure 1*: Relative bubble size as function of time, expressed as the ratio between the mean free path lengths, samples from example 1. Relative bubble size is determined using Turbiscan method described below.
*Figure 2:* Picture of two foams (from example 2), with: left emulsion S1 aerated with lentil flour foam, showing coarse gas bubbles; right emulsion S1 aerated with HFBII foam; showing finer gas bubbles.
*Figure 3:* Relative bubble size as function of time, expressed as the ratio between the mean free path lengths, samples from example 2: Relative bubble size is determined using Turbiscan method described below.

■: emulsion S1 aerated with lentil foam
x: emulsion S1 aerated with HFBII foam

*Figure 4:* Mean free path length as function of time, of samples from example 2; determined using Turbiscan method described below.

■: emulsion S1 aerated with lentil foam
x: emulsion S1 aerated with HFBII foam

*Figure 5:* Relative bubble size as function of time, expressed as the ratio between the mean free path lengths, samples from example 2, duplicate experiment. Relative bubble size is determined using Turbiscan method described below.

■: emulsion S1 aerated with lentil foam
x: emulsion S1 aerated with HFBII foam

*Figure 6:* Mean free path length as function of time, of samples from example 2, duplicate experiment; determined using Turbiscan method described below.

■: emulsion S1 aerated with lentil foam
x: emulsion S1 aerated with HFBII foam

*Figure 7:* Relative bubble size as function of time, expressed as the ratio between the mean free path lengths, samples from example 3. Relative bubble size is determined using Turbiscan method described below.

## EXAMPLES

The following non-limiting examples describe the present invention.

## Raw materials

- Class II Hydrophobin HFBII ex Danisco (Copenhagen, Denmark), produced by the fungus *Trichoderma reesei,* and isolated from fermentation broth. Concentration is 13.8 wt% of HFBII in aqueous solution, pH about 4.5, buffered with ammonium salt.
- citrus fibre: Herbacel AQ plus type N ex Herbafood (Werder (Havel), Germany);
- xanthan gum, Keltrol RD ex CP Kelco (Nijmegen, The Netherlands);
- EDTA: Dissolvine E-CA, ex Akzo Nobel (Amersfoort, The Netherlands).

*Pulse seeds*

The following pulse seeds were used in the experiments:

- Mung bean *(Vigna radiata),* 'Groene mungbonen', supplier Vanka Kawat BV (Leidschendam, Netherlands). Milled with a coffee mill and sieved to a size smaller than 500 micrometer.
- Red lentil *(Lens culinaris),* lentil flour, supplier AS Besin (Turkey).
- Chickpea *(Cicer arietinum),* Valle del Sole™, supplier Unidex B.V. (Hillegom, The Netherlands). Milled with a coffee mill and sieved to a size smaller than 355 micrometer.

Characterising data of these pulse seeds are given in the following table.

*Table 1 Composition of selected pulse seeds (source: http://ndb.nal.usda.gov, 9th October 2012)*

| Nutrient | amount per 100g | Chickpea (mature seeds, raw) | Mung beans (mature seeds, raw) | Lentils (raw) |
|---|---|---|---|---|
| water | g | 11.53 | 9.05 | 10.40 |
| protein | g | 19.30 | 23.86 | 25.80 |
| total lipid (fat) | g | 6.04 | 1.15 | 1.06 |
| ash | g | 2.48 | 3.32 | 2.67 |

(continued)

| Nutrient | amount per 100g | Chickpea (mature seeds, raw) | Mung beans (mature seeds, raw) | Lentils (raw) |
|---|---|---|---|---|
| total carbohydrate (by difference) [1] | g | 60.7 | 62.6 | 60.1 |
| fiber (total dietary) [2] | g | 17.4 | 16.3 | 30.5 |
| sugars, total [2] | g | 10.7 | 6.6 | 2.0 |
| starch [2] | g | 32.6 | 39.7 | 27.6 |

[1] total carbohydrate calculated by: 100% - (water+protein+lipid+ash)
[2] dietary fiber and sugars are included in the carbohydrate value, and it is assumed that starch is remainder of total carbohydrates. Also the dietary fiber value may contain starch, hence the value in the starch row is the minimum value.

*Egg yolk types*

*1. Heat stabilised Egg yolk* (92-8) ('SEY') ex Bouwhuis Enthoven (Raalte, the Netherlands). In this product the phospholipids from egg yolk are subjected to an enzymatic process using phospholipase, leading to split off of the fatty acid chains from the phospholipid molecules. The fragments are retained in the sample.

*2. Defatted Egg yolk powder* 79 ('DEY') ex Bouwhuis Enthoven (Raalte, the Netherlands. This is a hen's egg yolk, which has been pasteurized and dried, and defatted by ethanol extraction. Chemical and physical characteristics as given by supplier: solids ≥94%, fat content ≤11% (incl. phospholipids, cholesterol, triglycerides), protein content ≥75%, ethanol ≤4%.

*3. Liquid egg yolk* ('LEY') ex Bouwhuis Enthoven (Raalte, the Netherlands.

Characterising data of these egg yolk types are given in the following table.

*Table 2 Chemical characterisation of various egg yolk materials and fractions. Phospholipid analysis of materials (in % by weight), as determined using quantitative* $^{31}$*P-NMR spectroscopy:*

| | liquid egg yolk | heat stabilised egg yolk | defatted egg yolk |
|---|---|---|---|
| moisture | 51.5% * | 51.5% * | 5.8% & |
| dry matter | | | 94.2% & |
| protein | 13.5% * | 13.5% * | 73.3% & |
| total lipids (incl. triglycerides, phospholipids, cholesterol) | 25.5% * | 25.5% * | 11 % * |
| salt (Nacl) | 8% * | 8% * | |
| Total phospholipids *of which:* | 8.01% & | 4.06% & | 2.69% & |
| PC (phosphatidylcholine) | 5.97% | 0.15% | 1.67% |
| 1-LPC (1-lysophosphatidylcholine) | 0.03% | 0.25% | - |
| 2-LPC (lysophosphatidylcholine) | 0.12% | 2.64% | 0.05% |
| PI (phosphatidylinositol) | 0.09% | - | 0.37% |
| SPH (sphingomyelin) | 0.15% | 0.20% | 0.08% |
| PE (phosphatidylethanolamine) | 1.58% | 0.04% | 0.47% |
| LPE (lysophosphatidylethanolamine) | 0.07% | 0.78% | 0.03% |

(continued)

|  | liquid egg yolk | heat stabilised egg yolk | defatted egg yolk |
|---|---|---|---|
| *ratio protein / total phospholipids (wt/wt) (calculated)* | 1.69 | 3.32 | 27.2 |
| *ratio protein / total lipids (wt/wt) (calculated)* | 0.53 | 0.53 | 6.66 |

*) data from supplier
&) determined in house

## Methods - Bubble diameter

The gas bubble size in aerated compositions is estimated using a turbiscan turbidity measurement. In principle this is a spectrophotometer that can be loaded with a glass tube containing a foam sample. Light transmitted at the tube and reflected is measured. This is translated into the average bubble diameter.

Detailed procedure: sample volumes of approximately 20 mL were studied by turbidimetry using a Turbiscan Lab Expert (Formulaction, Toulouse, France). We interpret the average backscattering along the height of the foam sample with exclusion of the top and bottom parts where the backscattering is affected by edge effects. The backscattering (BS) is related to the transport mean free path length ($\lambda$, lambda) of the light in the sample through:

$$BS = \frac{1}{\sqrt{\lambda}} \tag{5}$$

In turn, the transport mean free path of light is related to the mean diameter (d) and the volume fraction ($\Phi$) of the gas bubbles through:

$$\lambda = \frac{2d}{3\Phi(1-g)Q} \tag{6}$$

Where g and Q are optical constants given by Mie theory (G. F. Bohren and D.R.Huffman, Absorption and Scattering of Light by Small Particles. Wiley, New York, 1983).

For foam dispersed in a transparent liquid, this method provides an estimate of the number average bubble size.

In an aerated emulsion, the mean free path length is influenced by the gas bubbles, and also by the oil droplets dispersed in the continuous aqueous phase. When two aerated emulsions are compared, and the emulsion bases are the same (i.e. oil droplet size), and only the degree of aeration (for example gas volume, or gas bubble size) is different, then a difference between the values of the mean free path length A of the two emulsions is only influenced by the gas bubbles. Hence the mean free path length $\lambda$ of these two samples gives a measure of the gas bubble size. Therefore comparing the mean free path length A of two emulsion bases that are the same, gives a measure for the difference in gas bubble size of the two samples. The mean free path length A is not the same as the average gas bubble size, it is a measure for the average gas bubble size.

When following the development of the gas bubble size during storage of aerated compositions, the mean free path length at the start of the measurement ($\lambda 0$ at t=0) is taken as the reference, and the measured mean free path length at various moments in time ($\lambda t$) is compared against this reference, by taking the ratio of these values ($\lambda t/\lambda 0$). This gives a measure for the development of the average gas bubble size compared to the starting value, assuming that the emulsion bases remain the same (i.e. oil droplet size) during storage.

## Example 1 -Aerated light mayonnaise with ground pulse seeds

In this example it is shown that a light mayonnaise containing ground pulse seeds and hydrophobin is stable after aeration.

The compositions in Table 3 were prepared, comparing red lentil flour (S1), chickpea flour (S5), and mungbean flour (S8), with a standard light-mayonnaise as comparative (S7). The comparative sample has been prepared with a composition which is the same as commercially available Hellmann's light mayonnaise (ex Unilever, Rotterdam). To these four compositions a foam containing hydrophobin was added to aerate the samples.

*Table 3 Compositions of oil-in-water emulsions with ground pulse seeds.*

| Ingredient | S1 [wt%] | S5 [wt%] | S7 [wt%] comparative | S8 [wt%] |
|---|---|---|---|---|
| Red lentil flour | 3 | | | |
| Chickpea flour | | 3 | | |
| Mungbean flour | | | | 3 |
| liquid egg yolk ('LEY') | | | 8.9 | |
| sucrose | 2 | 2 | 1.6 | 2 |
| kitchen salt (NaCl) | 1.6 | 1.6 | 1.7 | 1.6 |
| demineralised water | 39.9 | 39.9 | 30.8 | 39.9 |
| acetic acid 12% | 3.5 | 3.5 | 5.1 | 3.5 |
| sunflower oil | 50 | 50 | 50 | 50 |
| citrus fibre AQ plus N | | | 1.7 | |
| xanthan gum Keltrol RD | | | 0.07 | |
| EDTA | | | 0.1 | |
| pH adjusted to | 3.7 | 3.7 | 3.7 | 3.7 |

These oil-in-water emulsions were prepared using the following procedure:

● ground pulse seed slurry was prepared by dispersing flour into cold water (concentration 3% by weight), mix with a paddle stirrer at 200 rpm, heated to 85-90°C, and held at 85°C for 5 minutes;
● aqueous phase was prepared by mixing this slurry with sucrose and kitchen salt;
● oil was emulsified (using Silverson high shear mixer) by adding the oil to the aqueous phase while stirring;
● add acetic acid solution while mixing to set the pH.

Sample S7 (which is the same as commercially available Hellmann's light mayonnaise) was prepared in the following way:

● Citrus fibre is dispersed in water, with high shear Silverson mixer at 5,000 rpm, during 10 minutes, resulting in a slurry.
● Liquid egg yolk, sucrose, and kitchen salt were mixed into this slurry with the high shear Silverson mixer, at 3,000 rpm for 2 minutes.
● Xanthan gum was dispersed into oil. This oil dispersion was mixed into above aqueous phase, and held at 6000 rpm for 5 minutes. Acetic acid was added at 3000 rpm and mixed for 5 minutes.
● This pre-emulsion was finally homogenised in a high pressure homogeniser at 300 bar.

Aeration of these emulsions was performed in the following way. The hydrophobin HFBII as obtained was diluted with demineralised water to a concentration of 0.2% by weight. Subsequently this mixture of HFBII in water was aerated using a Kenwood mixer Premium Chef mixer, at maximum speed, to an overrun of about 700% to 800%, to yield HFBII foam. This foam was manually mixed with the emulsions to give aerated emulsions with 30 vol% air. About 8% of foam was mixed with an emulsion to obtain a volume fraction of air of 30 vol%. The final concentration of HFBII in the emulsion compositions was about 0.05% by weight of the composition.

The HFBII foam as such was very stable, after 1 day the foam visually had not lost volume. The foam was also stable when mixing with the emulsion, it appeared that no foam volume was lost by the manual mixing operation.

All aerated emulsions with pulse seeds could successfully be prepared, showing that the three ground pulse seeds could be used to make stable emulsions, and that the addition of an emulsifier like phospholipids or other emulsifier was not necessary. The aerated emulsions had a good structure.

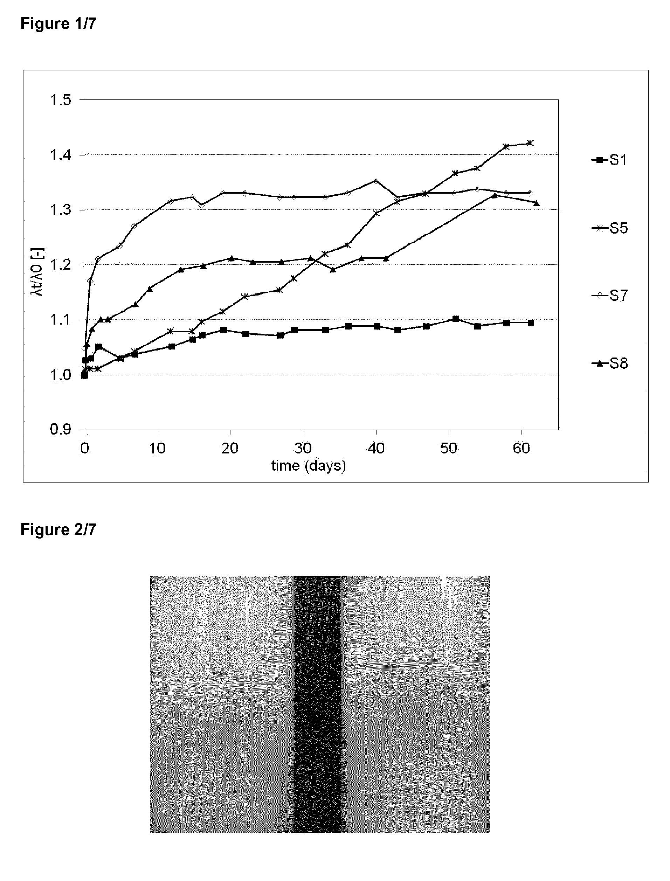

The stability of the aerated emulsions with regard to the aeration was followed using a Turbiscan as described above. The bubble size evolution of the samples during storage was determined, by determining the ratio between the mean free path lengths in time. Results of the bubble size evolution of these samples are given in Figure 1. This figure shows the ratio between the mean free path length $\lambda t$ and $\lambda 0$, which is a measure for the relative bubble size as function of storage time, during 60 days storage at a temperature of 20°C.

This Figure 1 shows that the comparative sample S7 (without ground pulse seed) shows a rapid increase of average bubble size already directly after production. It reaches a plateau after about 10 days, to remain more or less stable until a period of 60 days. The samples S5 (chickpea flour) and S8 (with mungbean flour) also show an increase to a similar value as the comparative S7, at a much smaller rate though. Until a storage period of 30 to 40 days, the average bubble size increase of samples S5 and S8 is smaller than that of the comparative sample S7. Finally sample S1 (containing red lentil flour) has an excellent stability. The average bubble size slowly increases during about 40 days, from 1 to about 1.1. Then it reaches a plateau to remain at the value of about 1.1.

**Example 2 - Aerated emulsions without hydrophobin**

The emulsion with sample code S1 from example 1 was aerated with a foam with lentil seed (without hydrophobin), in order to compare the foamability of the composition without hydrophobin. Also an aerated emulsion S1 aerated with HFBII foam was prepared again (a duplication of the aerated emulsion S1 from example 1), to compare this to the emulsion with lentil foam.

Aqueous foams with lentil flour were produced by dispersing lentil flour in water at room temperature, at two concentrations:

● 0.7% lentil flour, containing about 0.2% protein based on the weight of the foam (comparable to the 0.2% concentration of HFBII in the other sample); and
● 7% lentil flour, containing about 2% protein based on the weight of the foam.

The dispersions of lentil flour in water were aerated by using a Kenwood Premium Chef mixer, at maximum speed, during 10 minutes. The maximum overruns and stability that could be obtained were:

● 67% overrun for the 0.7% lentil flour dispersion; this foam coarsened very fast (within minutes), and it was not possible to obtain air bubble volume of 30 vol% when mixing this with emulsion S1;
● 100% overrun for the 7% lentil flour dispersion; this foam coarsened very fast (within minutes); in this case it was possible to obtain air bubble volume of 30 vol% when mixing this with emulsion S1. The air bubbles in this aerated emulsion were relatively coarse, compared to the aerated emulsion S1 with HFBII foam. This is shown in Figure 2.

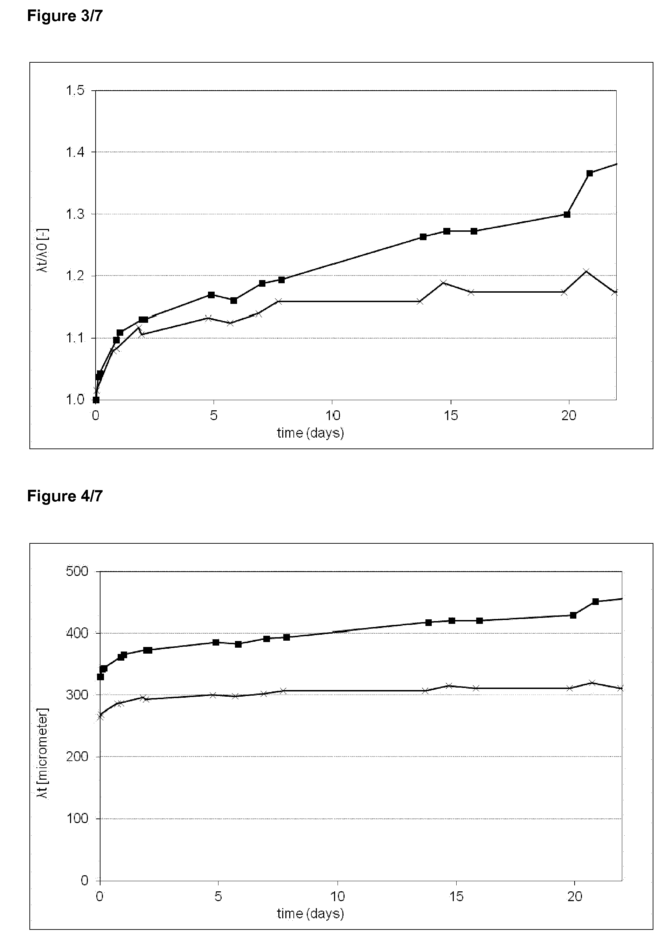

The aerated emulsions with an air volume of 30 vol% with either lentil foam or HFBII foam were analysed in time using the Turbiscan as described above, to follow the evolution of the relative gas bubble size. Figure 3 shows the ratio between the mean free path length $\lambda t$ and $\lambda 0$, which is a measure for the relative bubble size as function of storage time, for emulsion S1 aerated with lentil foam (■) and emulsion S1 aerated with HFBII foam (x). This shows that the emulsion with lentil foam shows faster bubble growth than the emulsion with HFBII foam. In case of HFBII there is some coarsening of gas bubbles, and this mainly takes place within the first 3 days. Thereafter there is only a minor coarsening. In case of lentil foam, there is rapid coarsening of gas bubbles the first 3 days, and this process continues.

Figure 4 shows the mean free path length $\lambda$ as function of time, of these same samples. This time mean free path length is not relative to the initial value, but the value of $\lambda$ is plotted. This value of $\lambda$ is a measure for the bubble size, it does not give the bubble size directly, as the oil droplets also influence the mean free path length $\lambda$. This figure shows that the mean free path length $\lambda$ of the emulsion with HFBII foam is smaller than of the emulsion with lentil foam, and this mean free path length $\lambda$ remains smaller. This graph is consistent with the picture in Figure 2, which shows that the bubbles in the emulsion with lentil foam are relatively coarse. As a small average bubble size is required, the aerated emulsion with HFBII shows a better performance, as the mean free path length $\lambda$ of these samples is smaller than of the lentil foam. In this comparison, the emulsion base is the same, hence this is a fair comparison. In this case the only influencing factor on the mean free path length $\lambda$ is the gas bubble size.

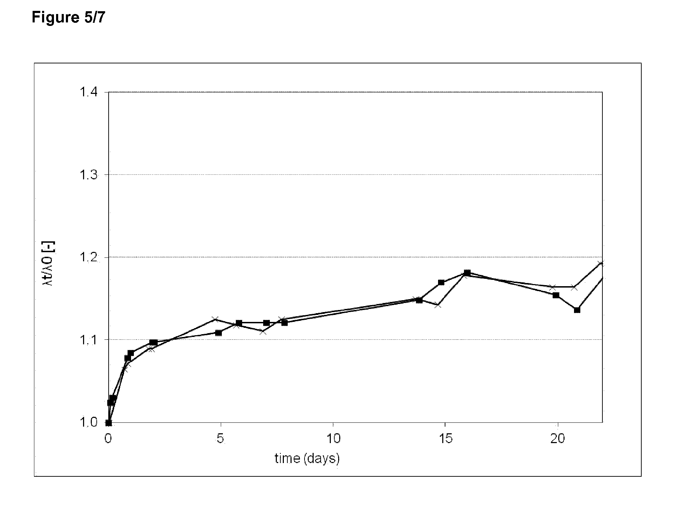

These examples of aerated emulsion S1 with either lentil foam or HFBII foam were duplicated. The only difference between the experiments as described above, is that for all experiments the lentil foam (water with 7% lentil flour) was made in a single batch. For the duplicate experiments that were done, this foam had been standing untouched for a longer time than for the experiments described above. As this lentil foam is not very stable, the coarsening process of this foam had started already before being mixed with the emulsion S1. Hence the growth of the relative bubble size in the duplicate experiments was smaller than in the experiments described above. This is shown in Figure 5, which shows the ratio between the mean free path length $\lambda t$ and $\lambda 0$ as function of time, of the duplicate samples for emulsion S1 aerated with lentil foam (■) and emulsion S1 aerated with HFBII foam (x). Both samples show the same relative mean free path length during storage.

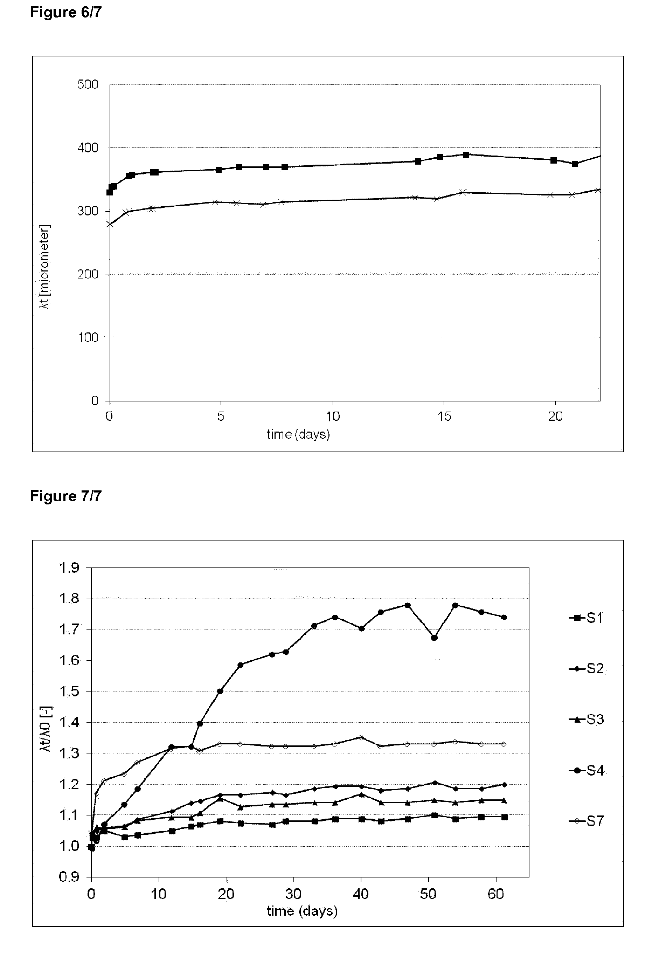

Although the ratio between λt and λ0 are the same for these samples, the mean free path length λ of the two samples is different. Figure 6 shows that there is still a difference in mean free path length as function of time, of the duplicate samples, for emulsion S1 aerated with lentil foam (■) and emulsion S1 aerated with HFBII foam (x). The mean free path length λ of the emulsion with lentil foam is larger than that of the HFBII foam. As a small average bubble size is required, the aerated emulsion with HFBII shows a better performance, as the mean free path length is smaller. In this comparison, the emulsion base is the same, hence this is a fair comparison. In this case the only influencing factor on the mean free path length λ is the gas bubble size.

**Example 3 - Influence of egg yolk type on stability of aerated mayonnaise with red lentil flour**

In this example the influence of various egg yolk types on stability of aerated light mayonnaise using hydrophobin as stabiliser and containing red lentil flour is investigated. Three types of egg yolk were tested and used, as described above.

Various oil-in-water emulsions were produced, having compositions as in Table 4. Each composition contained different egg yolk type or no egg yolk. The amount of egg yolk source was normalised on the protein content present in the egg yolk.

*Table 4 Compositions of oil-in-water emulsions with red lentil flour and various egg yolk types.*

| Ingredient | S1# [wt%] | S2 [wt%] | S3 [wt%] | S4 [wt%] comparative | S7# [wt%] comparative |
|---|---|---|---|---|---|
| Red lentil flour | 3 | 3 | 3 | 3 | |
| stabilised egg yolk (SEY)* | | 2.4 | | | |
| liquid egg yolk (LEY)* | | | | 2.4 | 8.9 |
| defatted egg yolk (DEY) | | | 0.43 | | |
| sucrose | 2 | 2 | 2 | 2 | 1.6 |
| kitchen salt (NaCl) | 1.6 | 1.4* | 1.6 | 1.4* | 1.7 |
| demineralised water | 39.9 | 37.7 | 39.5 | 37.7 | 30.8 |
| acetic acid 12% | 3.5 | 3.5 | 3.5 | 3.5 | 5.1 |
| sunflower oil | 50 | 50 | 50 | 50 | 50 |
| citrus fibre | | | | | 1.7 |
| xanthan gum | | | | | 0.07 |
| EDTA | | | | | 0.1 |
| pH adjusted to | 3.7 | 3.7 | 3.7 | 3.7 | 3.7 |
| *concentration phospholipids from egg yolk [wt%]%* | *0* | *0.097* | *0.012* | *0.19* | *0.71* |
| *concentration egg yolk protein [wt%]* | *0* | *0.32* | *0.32* | *0.32* | 1.20 |

#) S1 and S7 are the same samples as in Table 3
*) SEY and LEY both contain 2% NaCl
%) based on data in Table 2

The emulsions were prepared and aerated using the same procedure, as in example 1, wherein the egg yolk types in samples S2, S3, and S4 were added after acetic acid addition.

Aeration of these emulsions was performed in the same way as in example 1, leading to a final concentration of HFBII in the product of about 0.05% by weight of the composition. The aerated emulsions had a good structure.

The average bubble size during storage of these emulsions was determined using a Turbiscan as described above. Results of the relative bubble size evolution are given in Figure 7. This figure shows the ratio between the mean

free path lengths λt and λ0, which is a measure for the relative bubble size as function of storage time, during more than 60 days storage at a temperature of 20°C.

This Figure 7 shows that the comparative sample S7 (without ground pulse seed, with egg yolk) shows a rapid increase of the ratio between the mean free path lengths λt and λ0 already directly after production. It reaches a plateau after about 10 days, to remain more or less stable until a period of 60 days. Sample S4 (with liquid egg yolk) even shows a stronger increase of the average bubble size. This shows that the phospholipids lead to decreased stability of the gas bubbles. Samples S2 and S3 (with stabilised egg yolk and defatted egg yolk, respectively) showed very stable gas bubbles. The average bubble size slowly increases during more than 60 days, to values which are considerably lower than the comparative example S7. Sample S1 shows the highest stability.

**Example 4 - Comparative example without hydrophobin**

The emulsion S1 from example 1 was also aerated without addition of extra lentil foam (like in example 2) or hydrophobin foam (like in example 1), by aerating the emulsion S1 from example 1 in the Kenwood Premium Chef mixer, at maximum speed, during 10 minutes. The maximum overrun that was obtained was about 2.5% using this method.

**Claims**

1. An aerated composition having an overrun of at least 5%, comprising water, and ground pulse seed, wherein the pulse seed has a lipid content of maximally 6%, based on the weight of the raw pulse seed, and hydrophobin, and wherein the concentration of phospholipids is maximally 0.18% by weight of the composition.

2. A composition according to claim 1, having an overrun of at least 10%, preferably at least 20%, and preferably at most 200%, and preferably at most 100%.

3. A composition according to claim 1 or 2, wherein the concentration of ground pulse seed ranges from 0.1 to 10% by weight of the composition.

4. A composition according to any of claims 1 to 3, wherein the ground pulse seed is obtained from pulse seed having the following composition, calculated on raw weight of the pulse seed:

   - 25-55 wt% of starch;
   - 1-40 wt% of dietary fiber, preferably 10-40 wt% of dietary fiber;
   - 0.5-12 wt% of sugars;
   - 15-35 wt% of protein; and
   - 0.8-8 wt% of lipids, preferably 0.8-2 wt% lipids.

5. A composition according to any of claims 1 to 4, wherein the pulse seed is obtained from plants from the genuses *Vigna, Lens,* or *Cicer.*

6. A composition according to any of claims 1 to 5, wherein the pulse seed is obtained from plants from the species *Vigna radiata, Lens culinaris, Cicer arietinum,* preferably from plants from the species *Lens culinaris.*

7. A composition according to any of claims 1 to 6, wherein the concentration of phospholipids is maximally 0.13% by weight of the composition.

8. A composition according to any of claims 1 to 7, wherein the composition is a non-frozen composition.

9. A composition according to any of claims 1 to 8, wherein the composition is in the form of an oil-in-water emulsion.

10. A composition according to claim 9, wherein the composition contains from 5 to 70% of dispersed oil phase, based on the weight of the composition.

11. A composition according to any of claims 1 to 10, wherein the composition further comprises egg yolk fraction, and the egg yolk fraction comprises protein and phospholipids at a weight ratio of at least 3:1 wt/wt.

**12.** A composition according to any of claims 1 to 11, wherein the concentration of hydrophobin ranges from 0.001% to 2% by weight, preferably from 0.001% to 1% by weight.

**13.** A composition according to any of claims 1 to 12, wherein the hydrophobin comprises class II hydrophobin, preferably class II hydrophobin HFBI or class II hydrophobin HFBII.

**14.** A method for preparation of a composition according to any of claims 1 to 13, comprising the following steps:

a) hydrating ground pulse seed in water at a temperature of at least 70°C during at least 5 minutes;
b) optionally adding water soluble ingredients to the mixture from step a);
c) optionally dispersing liquid edible oil into the mixture from step b);
d) optionally adding egg yolk fraction comprising protein and phospholipids at a weight ratio of at least 3:1 wt/wt; and
e) mixing the mixture from step c) or step d) with an aqueous foam containing hydrophobin.

**Figure 1/7**

**Figure 2/7**

**Figure 3/7**

**Figure 4/7**

**Figure 5/7**

**Figure 6/7**

**Figure 7/7**

Europäisches
Patentamt

European
Patent Office

Office européen
des brevets

# EUROPEAN SEARCH REPORT

Application Number

EP 12 19 8877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/213453 A1 (BURMESTER SABINA SILVIA HAENEL [GB] ET AL) 4 September 2008 (2008-09-04) * paragraph [0002] - paragraph [0065]; claims; examples * | 1-14 | INV. A23G9/46 A23L1/20 A23L1/24 |
| Y | ASLI CAN KARACA ET AL: "Emulsifying properties of chickpea, faba bean, lentil and pea proteins produced by isoelectric precipitation and salt extraction", FOOD RESEARCH INTERNATIONAL, ELSEVIER APPLIED SCIENCE, BARKING, GB, vol. 44, no. 9, 2 June 2011 (2011-06-02), pages 2742-2750, XP028304134, ISSN: 0963-9969, DOI: 10.1016/J.FOODRES.2011.06.012 [retrieved on 2011-06-28] * the whole document * | 1-14 | |
| Y | SOUCI SIEGFRIED WALTER ET AL: "Food Composition and Nutrition Tables, Kichererbse, Chick pea, Pois Chiche", 1 January 2000 (2000-01-01), FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 823 - 824, XP002632921, ISBN: 978-3-88763-076-8 * the whole document * | 1-14 | TECHNICAL FIELDS SEARCHED (IPC) A23L A23G |
| Y | WO 2010/136354 A1 (UNILEVER PLC [GB]; UNILEVER NV [NL]; UNILEVER HINDUSTAN [IN]; COX ANDR) 2 December 2010 (2010-12-02) * the whole document * | 1-14 | |

-/--

The present search report has been drawn up for all claims

| Place of search | Date of completion of the search | Examiner |
|---|---|---|
| The Hague | 25 February 2013 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

Europäisches
Patentamt

European
Patent Office

Office européen
des brevets

**EUROPEAN SEARCH REPORT**

Application Number

EP 12 19 8877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/010425 A1 (UNILEVER PLC [GB]; UNILEVER NV [NL]; LEVER HINDUSTAN LTD [IN]; BERRY M) 2 February 2006 (2006-02-02) * the whole document * ----- | 1-14 | |
| A | EP 0 976 332 A2 (MEYER LUCAS GMBH & CO [DE]) 2 February 2000 (2000-02-02) * the whole document * ----- | 1-14 | |

TECHNICAL FIELDS
SEARCHED        (IPC)

The present search report has been drawn up for all claims

| Place of search | Date of completion of the search | Examiner |
|---|---|---|
| The Hague | 25 February 2013 | Bondar, Daniela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 19 8877

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2013

| Patent document cited in search report | | | Publication date | Patent family member(s) | | | Publication date |
|---|---|---|---|---|---|---|---|
| US 2008213453 | A1 | | 04-09-2008 | AU | 2007237303 | A1 | 10-07-2008 |
| | | | | BR | PI0705417 | A | 12-08-2008 |
| | | | | CA | 2612799 | A1 | 20-06-2008 |
| | | | | CN | 101204205 | A | 25-06-2008 |
| | | | | JP | 2008167751 | A | 24-07-2008 |
| | | | | MY | 143994 | A | 29-07-2011 |
| | | | | NZ | 563869 | A | 31-10-2008 |
| | | | | SG | 144045 | A1 | 29-07-2008 |
| | | | | US | 2008213453 | A1 | 04-09-2008 |
| | | | | US | 2011206820 | A1 | 25-08-2011 |
| | | | | US | 2012021106 | A1 | 26-01-2012 |
| | | | | ZA | 200710596 | A | 24-02-2010 |
| WO 2010136354 | A1 | | 02-12-2010 | AU | 2010252107 | A1 | 15-12-2011 |
| | | | | CA | 2763110 | A1 | 02-12-2010 |
| | | | | CN | 102448312 | A | 09-05-2012 |
| | | | | EP | 2434900 | A1 | 04-04-2012 |
| | | | | JP | 2012527871 | A | 12-11-2012 |
| | | | | US | 2011086157 | A1 | 14-04-2011 |
| | | | | WO | 2010136354 | A1 | 02-12-2010 |
| WO 2006010425 | A1 | | 02-02-2006 | AT | 358996 | T | 15-05-2007 |
| | | | | AT | 390855 | T | 15-04-2008 |
| | | | | AU | 2005266664 | A1 | 02-02-2006 |
| | | | | AU | 2005266665 | A1 | 02-02-2006 |
| | | | | BR | PI0513602 | A | 13-05-2008 |
| | | | | BR | PI0513613 | A | 13-05-2008 |
| | | | | CA | 2575319 | A1 | 02-02-2006 |
| | | | | CA | 2575325 | A1 | 02-02-2006 |
| | | | | DE | 602005000861 | T2 | 30-08-2007 |
| | | | | DE | 602005005743 | T2 | 07-05-2009 |
| | | | | ES | 2285631 | T3 | 16-11-2007 |
| | | | | IL | 180670 | A | 31-07-2011 |
| | | | | IL | 180671 | A | 31-05-2012 |
| | | | | JP | 4709216 | B2 | 22-06-2011 |
| | | | | JP | 4723581 | B2 | 13-07-2011 |
| | | | | JP | 2008507958 | A | 21-03-2008 |
| | | | | JP | 2008507959 | A | 21-03-2008 |
| | | | | JP | 2011041583 | A | 03-03-2011 |
| | | | | JP | 2011041584 | A | 03-03-2011 |
| | | | | MY | 143590 | A | 31-05-2011 |
| | | | | NZ | 552893 | A | 30-10-2009 |
| | | | | NZ | 552894 | A | 30-10-2009 |
| | | | | US | 2006024417 | A1 | 02-02-2006 |
| | | | | US | 2006024419 | A1 | 02-02-2006 |
| | | | | WO | 2006010425 | A1 | 02-02-2006 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 12 19 8877

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2013

| Patent document cited in search report | | Publication date | Patent family member(s) | | Publication date |
|---|---|---|---|---|---|
| | | | WO | 2006010426 A1 | 02-02-2006 |
| EP 0976332 | A2 | 02-02-2000 | DE | 19833574 A1 | 03-02-2000 |
| | | | EP | 0976332 A2 | 02-02-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006010425 A1
- WO 2007039064 A1
- WO 2010136354 A1
- WO 2010136355 A1
- WO 2012089448 A1
- WO 2006082640 A1
- US 6783271 B
- EP 2183983 A2
- WO 9951106 A1
- KR 100529149 B1
- EP 0371725 A1
- GB 557483 A
- EP 1967077 A1
- EP 976332 A2
- WO 0174864 A
- WO 9641882 A
- WO 0157076 A


**Non-patent literature cited in the description**

- **SATHE S.K. et al.** *Journal of Food Science,* 1982, vol. 47 (2), 491-497
- **SATHE S.K. et al.** *Journal of Food Science,* 1981, vol. 46 (1), 71-81
- **WESSELS.** *Advances in Microbial Physiology,* 1997, vol. 38, 1-45
- **WOSTEN.** *Annual Reviews of Microbiology,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol.,* 1999, vol. 65, 5431-5435
- **WOSTEN.** *Annu Rev. Microbiol.,* 2001, vol. 55, 625-646
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **G. F. BOHREN ; D.R.HUFFMAN.** *Absorption and Scattering of Light by Small Particles,* 1983